# EUROPEAN PATENT SPECIFICATION

(11) **EP 3 712 207 B1**
(45) Date of publication and mention of the grant of the patent: **01.11.2023**
(21) Application number: 17932235.9
(22) Date of filing: 14.11.2017
(51) Int. Cl.: C08L 61/10, C08L 1/02, C08L 1/26, C08L 1/28, C08L 61/04, C08L 61/06

(54) **MICROFIBRILLATED-CELLULOSE-CONTAINING COMPOSITION, PREPREG, MOLDED BODY, AND METHOD FOR MANUFACTURING PREPREG**
ZUSAMMENSETZUNG MIT MIKROFIBRILLIERTER CELLULOSE, PREPREG, FORMKÖRPER UND VERFAHREN ZUR HERSTELLUNG EINES PREPREGS
COMPOSITION CONTENANT DE LA CELLULOSE MICROFIBRILLÉE ET PROCÉDÉ DE FABRICATION D'UN PRÉIMPRÉGNÉ

(43) Date of publication of application: 23.09.2020
(73) Proprietor: Risho Kogyo Co., Ltd., Osaka-shi, Osaka 530-0003 (JP)
(72) Inventor: OKUMURA, Hiroshi, Amagasaki-shi, Hyogo 661-0012 (JP); NISHIHARA, Hiroki, Amagasaki-shi, Hyogo 661-0012 (JP)
(74) Representative: Viering, Jentschura & Partner mbB Patent- und Rechtsanwälte
(86) International application number: PCT/JP2017/040980
(87) International publication number: WO 2019/097586

(56) References cited:
- WO-A1-2010/055839
- JP-A- S5 075 274
- JP-A- 2006 312 281
- JP-A- 2006 312 688
- JP-A- 2008 248 093
- JP-A- 2008 297 364
- JP-A- 2009 096 167
- JP-A- 2011 148 214
- JP-A- 2012 107 199
- JP-A- 2013 018 851
- JP-A- 2015 000 934
- NAKAGAITO A N ET AL: "Novel high-strength biocomposites based on microfibrillated cellulose having nano-order-unit web-like network structure", APPLIED PHYSICS A MATERIALS SCIENCE & PROCESSING, SPRINGER BERLIN HEIDELBERG, BERLIN/HEIDELBERG, vol. 80, no. 1, 1 January 2005 (2005-01-01), pages 155-159, XP036005726, ISSN: 0947-8396, DOI: 10.1007/S00339-003-2225-2 [retrieved on 2005-01-01]

## Description

### Technical Field

The present invention relates to a microfibrillated cellulose-containing composition and a method for producing the prepreg.

### Background Art

Japanese Patent No. 3641690 (Patent Literature 1) discloses a high strength material using a cellulose microfibril. JP2009096167 A discloses compositions for prepregs comprising microfibrillated cellulose and a phenol resin.

### Citation List

### Patent Literature

Patent Literature 1: Japanese Patent No. 3641690

### Summary of Invention

### Technical Problem

With respect to conventional materials using microfibrillated cellulose, to obtain a thin plate-shaped molding, for example, paper produced by using microfibrillated cellulose is impregnated with a resin material prepared to have a certain viscosity, and a plurality of layers of this paper are stacked and subjected to heat and compression, thereby obtaining a molding. In this configuration, however, layers mainly made of paper and layers from which the impregnating resin exudes are alternately formed, and as a result, the quality of the material of the resulting molding is not uniform in the thickness direction. Such a situation is unfavorable in terms of physical properties of the molding. The technique disclosed in Patent Literature 1 cannot cope with this situation.

An object of the present invention is to provide a microfibrillated cellulose-containing composition with which a molding including uniformly dispersed microfibrillated cellulose can be appropriately obtained.

Another object of the present invention is to provide a method for producing a prepreg capable of ensuring production of a prepreg with which a molding including uniformly dispersed microfibrillated cellulose can be appropriately obtained.

### Solution to Problems

In an aspect of the present invention, a microfibrillated cellulose-containing composition according to claim 1 is provided.

In this microfibrillated cellulose-containing composition, microfibrillated cellulose can be uniformly dispersed. Thus, with this microfibrillated cellulose-containing composition, a molding including uniformly dispersed microfibrillated cellulose can be appropriately obtained.

In another aspect of the present invention, a method for producing a prepreg according to claim 5 is provided.

This method ensures production of a prepreg with which a molding including uniformly dispersed microfibrillated cellulose can be appropriately obtained.

### Effects of the Invention

With the microfibrillated cellulose-containing composition described above, a molding including uniformly dispersed microfibrillated cellulose can be appropriately obtained.

### Brief Description of Drawings

FIG. 1 is a schematic cross-sectional view illustrating an example of a prepreg according to one embodiment of the present invention.
FIG. 2 is a flowchart depicting typical steps of a method for producing the prepreg illustrated in FIG. 1.

### Description of Embodiments

### [Description of Embodiment of the Invention]

An embodiment of the present invention will be described hereinafter. A microfibrillated cellulose-containing composition according to the present invention includes a phenol resin, microfibrillated cellulose, and at least one of water or a water-soluble organic solvent.

The microfibrillated cellulose according to the present invention is so-called cellulose nanofibers, and is microfibril-like cellulose fibers. Examples of a material for the microfibrillated cellulose include materials derived from plants, such as wood and cotton, and materials derived from animals, such as a material derived from chitin and a material derived from chitosan.

As an example of the phenol resin, a so-called resole-type phenol resin is preferably used. Such a phenol resin can be obtained by condensation reaction between formaldehyde and either phenol or a phenol compound under the presence of a basic catalyst. A water-soluble resole may also be used. The phenol resin preferably has a weight-average molecular weight of 1500 or less. Such a phenol resin can obtain high dispersibility when the phenol resin contains microfibrillated cellulose. The weight-average molecular weight of the phenol resin is preferably 1000 or less from the viewpoint of storage stability of a mixture.

Preferred examples of the water-soluble organic solvent used as a solvent as a component except for the phenol resin and microfibrillated cellulose include acetone and alcohols having low molecular weights. Examples of the alcohols include methanol, ethanol, (iso)propanol, and (iso)butanol. In this case, as the solvent, a water-soluble organic solvent may be used solely, a mixture of a water-soluble organic solvent and water may be used, or water may be used solely.

The content of the phenol resin in the entire prepreg may be any content, and is preferably within the range from 0.1 to 60 % by weight.

The microfibrillated cellulose-containing composition is configured to further include carboxymethyl cellulose. In this case, in a production process, in coating a thin plate-shaped member with a microfibrillated cellulose-containing composition, agglomeration of microfibrillated cellulose does not easily occur and, in addition, thixotropy appears. Thus, coating can be improved.

The content of carboxymethyl cellulose in the microfibrillated cellulose-containing composition is 0.05 to 5% by weight. The content of carboxymethyl cellulose in the microfibrillated cellulose-containing composition is preferably 3 to 5% by weight. With this configuration, it is possible to improve coating while ensuring suppression of agglomeration of microfibrillated cellulose in the solution.

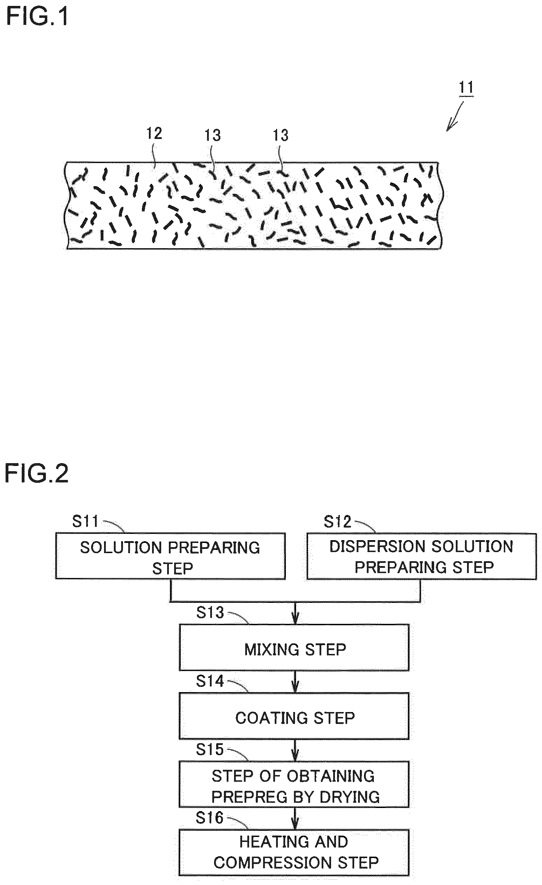

A configuration of the prepreg according to one embodiment of the present invention will now be described. FIG. 1 is a schematic cross-sectional view illustrating the configuration of the prepreg according to the embodiment of the present invention.

With reference to FIG. 1, a prepreg 11 according to one embodiment of the present invention has a so-called plate shape. The prepreg 11 includes a phenol resin 12 and microfibrillated cellulose 13. The microfibrillated cellulose 13 is uniformly dispersed in the phenol resin 12. That is, the content of the microfibrillated cellulose 13 is the same in both of a surface layer and an inner layer of the prepreg 11.

Next, a method for producing the prepreg 11 will be described. FIG. 2 is a flowchart depicting typical steps of the method for producing the prepreg illustrated in FIG. 1.

With also reference to FIG. 2, the method for producing the prepreg 11 according to one embodiment of the present invention, first, a dissolved solution is prepared by dissolving a phenol resin solution to have an intended concentration which obtained by reacting phenol and formalin in at least one of water or a water-soluble organic solvent and diluting with methanol or water (step S11 in FIG. 2, hereinafter "step" will be omitted). The phenol resin used here is water-soluble resole. In this case, the phenol resin may be dissolved while being added to the water-soluble organic solvent, or the water-soluble organic solvent may be dissolved in the phenol resin while being added to the phenol resin, for example. In this manner, a dissolved solution in which the phenol resin is dissolved in at least one of water or the water-soluble organic solvent is prepared.

Water is further added to microfibrillated cellulose that is dispersed in water so that microfibrillated cellulose is dispersed in water to have an intended concentration of microfibrillated cellulose. In this case, while microfibrillated cellulose previously dispersed in water as a material, the microfibrillated cellulose is gradually added to previously prepared water with the water being stirred. In this manner, a dispersion solution in which microfibrillated cellulose is dispersed in water is prepared (S12). In the step of preparing the dispersion solution, the dispersion solution may be obtained by appropriately adding water to dry microfibrillated cellulose and stirring the mixture to a state where the microfibrillated cellulose is dispersed in water, for example. In the step of preparing the dispersion solution, from the viewpoint of enhancing easiness in treatment, the content of the microfibrillated cellulose in the total amount of water and the microfibrillated cellulose is preferably 50% by weight or less, and more preferably 30% by weight or less.

Thereafter, the dispersion solution obtained in S12 is mixed with the solution obtained in S11 in an intended proportion (S13). In this case, the dispersion solution may be mixed to the solution, or the solution may be mixed to the dispersion solution.

Subsequently, the obtained mixture is applied onto a film-shaped member to an intended thickness by using a die coater, a comma coater, or a gravure coater, for example, (S14). Specific examples of the film-shaped member include a film having a thickness of 25 µm to 100 µm and woven textile fabrics such as a glass fabric and a cotton fabric. Then, as the step of obtaining a prepreg by drying the coating, the drying is promoted by heating in a drying oven, for example, (S15). In this manner, a prepreg 11 in which the microfibrillated cellulose is dispersed in the phenol resin is obtained.

Furthermore, to obtain a molding, the following steps are performed. Specifically, one or more layers of the prepreg 11 obtained by S15 are stacked. The number of layers of the prepreg 11 is set at any number depending on the thickness of a molding to be finally obtained. The one or more layers of the prepreg 11 stacked to have an intended thickness is subjected to a predetermined pressure, and heated at a predetermined temperature to be hardened. That is, as a heating and compression step, heating and compression formation is performed on the prepreg 11 (S16). In this manner, the molding according to the embodiment of the present invention is obtained. In one embodiment, the molding has a plate shape.

In the mixing step defined as S13 in the process of producing the prepreg 11, carboxymethyl cellulose is additionally mixed as necessary. In this case, dispersibility of the microfibrillated cellulose can be enhanced. In the mixing step, from the viewpoint of enhancing easiness in treatment, the proportion of carboxymethyl cellulose in the mixture is preferably 1 to 10% by weight.

### [Examples]

Microfibrillated cellulose-containing compositions having different composition ratios were produced in accordance with formulas of Examples 1 through 4, and evaluation tests were conducted. The evaluation tests will be described in detail later. For comparison, microfibrillated cellulose-containing compositions having different composition ratios were produced in accordance with formulas of Comparative Examples 1 and 2. Similar evaluation tests were also conducted. Table 1 shows evaluation results of Examples 1 through 4 and Comparative Examples 1 and 2.

### (Example 1)

Microfibrillated cellulose (Cerish KY-100G produced by Daicel FineChem Ltd.) dispersed in a concentration of 10% by weight in water was prepared, and 5 parts by weight of carboxymethyl cellulose was mixed in the microfibrillated cellulose. The resulting mixture was supplemented and mixed with a resole-based phenol resin dissolved in a mixture solvent of water and methanol. The composition ratio among the phenol resin, the microfibrillated cellulose, and the carboxymethyl cellulose was 100 : 20 : 1. In the microfibrillated cellulose used in Example 1, the diameter of fibers is in the range from several nanometers (nm) to several hundreds of micrometers (µm).

This mixture solution was applied onto a 38-µm polyethylene terephthalate (PET) film subjected to a releasing treatment to a thickness of 0.5 mm, and then, was dried at 150°C for five minutes. In this manner, a transparent sheet-shaped prepreg in which microfibrillated cellulose was uniformly dispersed in the phenol resin was obtained. In the case of using a film as the film-shaped member, the surface of the film may be subjected to a releasing treatment in order to have excellent releasability.

Then, 20 sheets of the thus-obtained prepreg were laid up, and subjected to heating and compression under a pressure of 5.0 MPa at 180°C for three hours, thereby obtaining a yellowish blown to blown light-transmissive molding. A bending strength, a bending modulus, and a water absorption of this molding were measured. The measurement of the water absorption was conducted by immersion in pure water at 23°C for 48 hours and in conformity with JIS-K6911. The bending strength and the bending modulus were also measured after the molding was left for 12 hours in a dryer at 170°C, and the degrees of changes thereof were examined as heat resistance. The water absorption is preferably low from the viewpoint of suppression of a dimensional change in formation of the molding. Mechanical strength such as the bending strength or the bending modulus is preferably high. With respect to heat resistance, changes in the bending strength and the bending modulus are preferably small.

### (Example 2)

A molding was produced in a manner similar to that of Example 1 except that the composition ratio of the phenol resin, the microfibrillated cellulose, and the carboxymethyl cellulose described in Example 1 was 100 : 40 : 2.

### (Example 3)

A molding was prepared in a manner similar to that of Example 1 except that the microfibrillated cellulose used in Example 1 was changed to "BiNFi-S BMa10010" produced by Sugino Machine Limited. In microfibrillated cellulose used in Example 3, the diameter of fibers was in the range from several nanometers to several hundreds of nanometers.

### (Example 4)

A molding was prepared in a manner similar to that of Example 2 except that the microfibrillated cellulose used in Example 2 was changed to "BiNFi-S BMa10010" produced by Sugino Machine Limited.

### (Comparative Example 1)

Microfibrillated cellulose (CerishKY-10OG produced by Daicel FineChem Ltd.) dispersed in a concentration of 10% by weight in water was diluted to 1% with water, and then filtered in a decompression state while being sequentially supplemented with diluted microfibrillated cellulose until the thickness of a residue reaches 20 mm, and then was subjected to heating and compression under a pressure of 5.0 MPa at 180°C for three hours, thereby obtaining a molding made only of microfibrillated cellulose.

### (Comparative Example 2)

Microfibrillated cellulose (CerishKY-10OG produced by Daicel FineChem Ltd.) dispersed in a concentration of 10% by weight in water was diluted to 1% with water, and then filtered and dried. The resulting sheet-shaped molding was immersed in the phenol resin solution of Example 1 for one hour, and then dried, thereby obtaining a sheet-shaped prepreg. The molding was produced under conditions similar to those in Example 1. The composition rate of the microfibrillated cellulose and the phenol resin was prepared to be equal to that in Example 1.

**[Table 1]**

| | Example 1 | Example 2 | Example 3 | Example 4 | Comparative Example 1 | Comparative Example 2 |
|---|---|---|---|---|---|---|
| bending strength (MPa) | 175 | 165 | 185 | 180 | 70 | 110 |
| bending modulus (GPa) | 14 | 14 | 15 | 14 | 6.0 | 11.0 |
| water absorption (%) | 2 to 3 | 2 to 3 | 2 to 3 | 2 to 3 | 30 to 35 | 10 to 20 |
| water resistance | good | good | good | good | poor | poor |
| bending strength after heating (MPa) | 175 | 165 | 185 | 180 | 20 | 75 |
| bending modulus after heating (GPa) | 14 | 14 | 15 | 14 | 1.0 < | 7.0 |
| heat resistance | good | good | good | good | poor | poor |

Table 1 shows that the bending strengths in Examples 1 through 4 are 165 MPa or more. The bending moduli thereof are kept at 14 GPa or more. On the other hand, the bending strength of Comparative Example 1 is only 70 MPa, and the bending strength of Comparative Example 2 is only 110 MPa. The bending modulus of Comparative Example 1 is about 6.0 GPa, and the bending modulus of Comparative Example 2 is about 11.0 GPa. These values are very low. Thus, from the viewpoint of strength of the molding, it is shown that Examples 1 through 4 are superior.

Each of the water absorptions in Examples 1 through 4 is about 2 to 3%, and water is not significantly absorbed. On the other hand, the water absorption of Comparative Example 1 is 30 to 35%, and the water absorption of Comparative Example 2 is 10 to 20%. Both values are very high. That is, from the viewpoint of water resistance, Examples 1 through 4 are also superior to Comparative Examples 1 and 2.

A change in bending property in remaining at 170°C for 12 hours was evaluated as an index of heat resistance. All the heat resistances of Examples 1 through 4 are good, whereas those of Comparative Examples 1 and 2 are poor. That is, with respect to heat resistance, Examples 1 through 4 are also superior to Comparative Examples 1 and 2.

It should be understood that the embodiment disclosed here is illustrative and non-restrictive in every respect. The scope of the present invention is defined by the terms of the claims, rather than the description above, and is intended to include any modifications within the scope and meaning equivalent to the terms of the claims.

### Industrial Applicability

A microfibrillated cellulose-containing composition, a prepreg, a molding, and a method for producing a prepreg according to the present invention are effectively used especially in a case where it is required to appropriately obtain a molding including uniformly dispersed microfibrillated cellulose. The molding of the present invention has low water absorbing property, high strength, and high heat resistance, and thus, can be used as a substitute for an electronic material or a steel material or a construction material, for example.

## Claims

1. A microfibrillated cellulose-containing composition comprising:
a phenol resin (12);
microfibrillated cellulose (13);
at least one of water or a water-soluble organic solvent; and
carboxymethyl cellulose, wherein a content of the carboxymethyl cellulose in the microfibrillated cellulose-containing composition is 0.05 to 5% by weight.

2. The microfibrillated cellulose-containing composition according to claim 1, wherein a weight-average molecular weight of the phenol resin (12) is 1500 or less.

3. The microfibrillated cellulose-containing composition according to claim 1 or 2, wherein the content of the carboxymethyl cellulose in the microfibrillated cellulose-containing composition is 3 to 5% by weight.

4. The microfibrillated cellulose-containing composition according to any one of claims 1 to 3, wherein the phenol resin (12) is a resole-type phenol resin.

5. A method for producing a prepreg (11), the method comprising:
a solution preparing step of preparing a solution by dissolving a phenol resin using water-soluble resole in at least one of water or a water-soluble organic solvent (S11);
a dispersion-solution preparing step of preparing a dispersion solution in which microfibrillated cellulose is dispersed in water (S12);
a mixing step of mixing the dispersion solution in the solution in an intended ratio (S13) after mixing carboxymethyl cellulose in the dispersion solution;
a coating step of coating a film-shaped member with a microfibrillated cellulose-containing composition obtained by the mixing step (S14); and
a prepreg obtaining step of obtaining a prepreg (11) by drying a coating obtained by the coating step (S15),
wherein a content of the carboxymethyl cellulose of the microfibrillated cellulose-containing composition is 0.05 to 5% by weight.

## Patentansprüche

1. Mikrofibrillierte Cellulose enthaltende Zusammensetzung,
aufweisend:
ein Phenolharz (12),
mikrofibrillierte Cellulose (13),
wenigstens eines aus Wasser oder einem wasserlöslichen organischen Lösemittel und
Carboxymethylcellulose, wobei ein Anteil der Carboxymethylcellulose in der mikrofibrillierte Cellulose enthaltenden Zusammensetzung 0,05 bis 5 Gew.-% beträgt.

2. Mikrofibrillierte Cellulose enthaltende Zusammensetzung gemäß Anspruch 1, wobei das gewichtsmittlere Molekulargewicht des Phenolharzes (12) 1500 oder weniger beträgt.

3. Mikrofibrillierte Cellulose enthaltende Zusammensetzung gemäß Anspruch 1 oder 2, wobei der Anteil der Carboxymethylcellulose in der mikrofibrillierte Cellulose enthaltenden Zusammensetzung 3 bis 5 Gew.-% beträgt.

4. Mikrofibrillierte Cellulose enthaltende Zusammensetzung gemäß irgendeinem der Ansprüche 1 bis 3, wobei das Phenolharz (12) ein Phenolharz vom Resoltyp ist.

5. Verfahren zur Herstellung eines Prepregs (11), wobei das Verfahren aufweist:
einen Lösungsvorbereitungsschritt des Vorbereitens einer Lösung mittels Auflösens eines Phenolharzes unter Verwendung von wasserlöslichem Resol in wenigstens einem aus Wasser oder einem wasserlöslichen organischen Lösemittel (S11);
einen Dispersionslösungsvorbereitungsschritt des Vorbereitens einer Dispersionslösung,, in dem mikrofibrillierte Cellulose in Wasser dispergiert wird (S12);
einen Mischschritt des Mischens der Dispersionslösung in die Lösung in einem beabsichtigten Verhältnis (S13) nach einem Mischen von Carboxymethylcellulose in die Dispersionslösung;
einen Beschichtungsschritt des Beschichtens eines filmförmigen Elements mit einer mikrofibrillierte Cellulose enthaltenden Zusammensetzung, die mittels des Mischschritts (S14) erlangt wurde; und
einen Prepregerlangungsschritt des Erlangens eines Prepregs (11) mittels Trocknens einer mittels des Beschichtungsschritts (S15) erlangten Beschichtung,
wobei der Anteil der Carboxymethylcellulose der mikrofibrillierte Cellulose enthaltenden Zusammensetzung 0,05 bis 5 Gew.-% beträgt.

## Revendications

1. Composition contenant de la cellulose microfibrillée comprenant:
une résine phénolique (12),
de la cellulose microfibrillée (13),
au moins un d'eau ou de solvant organique soluble dans eau et
carboxyméthylcellulose, dans laquelle une teneur en carboxyméthylcellulose dans la composition contenant de la cellulose microfibrillée est de 0,05 à 5 % en poids.

2. Composition contenant de la cellulose microfibrillée selon la revendication 1, dans laquelle le poids moléculaire moyen en poids de la résine phénolique (12) est inférieur ou égal à 1500.

3. Composition contenant de la cellulose microfibrillée selon la revendication 1 ou 2, dans laquelle la teneur en carboxyméthylcellulose dans la composition contenant de la cellulose microfibrillée est de 3 à 5 % en poids.

4. Composition contenant de la cellulose microfibrillée selon l'une quelconque des revendications 1 à 3, dans laquelle la résine phénolique (12) est une résine phénolique de type résole.

5. Procédé de fabrication d'un pré-imprégné (11), comprenant:
une étape de préparation d'une solution de préparer une solution par dissolution d'une résine phénolique à l'aide d'une résine soluble dans eau dans au moins un d'eau ou d'un solvant organique soluble dans eau (S11),
une étape de préparation d'une solution de dispersion de préparer une solution de dispersion dans laquelle la cellulose microfibrillée est dispersée dans eau (S12),
une étape de mélange de mélanger la solution de dispersion dans la solution dans un rapport prévu (S13) après avoir mélangé la carboxyméthylcellulose dans la solution de dispersion,
une étape de revêtement de revêtir un élément en forme de film avec une composition contenant de la cellulose microfibrillée obtenue par l'étape de mélange (S14) et
une étape d'obtention d'un pré-imprégné d'obtenir un pré-imprégné (11) en séchant un revêtement obtenu par l'étape de revêtement (S15),
dans laquelle une teneur en carboxyméthylcellulose dans la composition contenant de la cellulose microfibrillée est de 0,05 à 5 % en poids.
